# EUROPEAN PATENT APPLICATION

(11) **EP 2 099 197 A1**
(43) Date of publication of application: **09.09.2009**
(21) Application number: 09154235.7
(22) Date of filing: 03.03.2009
(51) Int. Cl.: H04L 29/08

(54) **Electronic apparatus, transmission method, and program**

(30) Priority: 04.03.2008 JP 2008052850
(71) Applicant: Sony Corporation, Tokyo 108-0075 (JP)
(72) Inventor: Nakayama, Tetsunori, TOKYO 108-0075 (JP)
(74) Representative: Beder, Jens

(57) **Abstract**

An electronic apparatus is connectable to another electrical apparatus through a predetermined interface. The electronic apparatus includes: a storing section configured to store content files and attribute information indicating attributes of the files; an inputting section configured to input a user operation for designating a desired one of the stored files; and a transmitting section configured to transmit, upon connection with the other electronic apparatus, the attribute information of the designated file to the other electronic apparatus so that the other electronic apparatus displays information regarding the designated file.

## Description

### CROSS REFERENCES TO RELATED APPLICATIONS

The present invention contains subject matter related to Japanese Patent Application JP 2008-052850 filed in the Japanese Patent Office on March 4, 2008, the entire contents of which are incorporated herein by reference.

### BACKGROUND OF THE INVENTION

### 1. Field of the Invention

The present invention relates to an electronic apparatus that is capable of transferring data to another electronic apparatus by using, for example, an interface such as a USB (universal serial bus), a transmission method for the electronic apparatus, and a program therefor.

### 2. Description of the Related Art

Transferring data, including image files, stored in a storage medium built in an electronic apparatus, such as a DSC (digital still camera), to another electronic apparatus, such as a PC (personal computer), is often performed in recent years. In this case, when the transfer-source electronic apparatus and the transfer-destination electronic apparatus are connected through a transmission path such as a USB, the transfer-destination electronic apparatus generally obtains attribute information (e.g., file names, file sizes, and a hierarchical structure) of all files stored in the storage medium in the transfer-source electronic apparatus in accordance with a protocol, for example, a PTP (picture transfer protocol) or a USB mass-storage protocol, before receiving transfer data itself. In recent years, with increased capacities of storage media built in electronic apparatuses, the number of files that can be stored in the storage media is also enormous. Thus, as the number of transferable files increases, it takes more time for the transfer-destination electronic apparatus to obtain the attribute information.

As a technology for reducing the time taken for transferring the attribute information, Japanese Unexamined Patent Application Publication No. 2006-86862 discloses an image capture device. When not connected to an information processing apparatus, the image capture apparatus caches file entries of files stored in a storage medium, and upon connection with the information processing apparatus, the image capture apparatus generates transfer information on the basis of the file entries and transmits the transfer information. By caching the fie entries in advance, the image capture apparatus makes it possible to reduce the time taken until the information processing apparatus responds to the user.

### SUMMARY OF THE INVENTION

However, the image capture apparatus,disclosed in Japanese Unexamined Patent Application Publication No. 2006-86862 pre-generates the transfer information for all files stored in the storage medium and then transfers the transfer information at once. Thus, the information processing apparatus is often provided with logic for receiving the information transferred at once. The image capture apparatus also transfers the transfer information for files that the user does not wish to transfer. Thus, when the user searches for a desired file on a display section of the information processing apparatus, all files stored in the storage medium in the image capture device are searched. Thus, such a scheme is insufficient.

In view of the foregoing situations, it is desirable to provide an electronic apparatus that is capable of selectively transmitting attribute information of files desired by the user without need for a special configuration for a connection-target electronic apparatus.

According to one embodiment of the present invention, there is provided an electronic apparatus that is connectable to another electrical apparatus through a predetermined interface. The electronic apparatus includes: means for storing content files and attribute information indicating attributes of the files; means for inputting a user operation for designating a desired one of the stored files; and means for transmitting, upon connection with the other electronic apparatus, the attribute information of the designated file to the other electronic apparatus so that the other electronic apparatus displays information regarding the designated file.

With this arrangement, the electronic apparatus is connected to the other electronic apparatus through the predetermine interface and the other electronic apparatus does not need to have a special configuration. Of the files stored by the storing means, only attribute information of a desired file designated by the user operation is selectively transmitted to the other electronic apparatus, so that the other connection-target electronic apparatus can display information regarding the file desired by the user, on the basis of the attribute information. Thus, the user can search for only a desired file at the other electronic apparatus, and thus only the desired file can be transferred to the other electronic apparatus. The attribute information refers to information, such as a file name, a file size, and hierarchical information.

The electronic apparatus may further includes: means for generating pieces of identification information that identify the files, respectively; and means for controlling the generating means so that the generating means does not generate the identification information of an undesignated one of the files. The transmitting means may transmit the generated identification information to the other electronic apparatus before transmitting the attribute information.

With this arrangement, of the files, the identification information of only a file designated by the user operation is generated and is transmitted to the other electronic apparatus. This allows the other electronic apparatus to selectively receive the attribute information of the file desired by the user, on the basis of the identification information. The term "identification information" refers to, for example, ObjectHandle during USB connection.

The electronic apparatus may further include displaying means for displaying a menu screen that causes the desired file to be designated.

With this arrangement, it is possible to allow the user to designate a desired file on the menu screen. The generating means generates identification information for the file designated on the menu screen, so that the attribute information for the file can be selectively transferred to the other electronic apparatus.

The displaying means may display, on the menu screen, a first menu for designating an arbitrary one of the stored files and a second menu for designating all of the stored files.

With this arrangement, the user can select between causing the other electronic apparatus to display information regarding arbitrary files and causing information regarding all files, thus improving convenience. When the user selects the first menu, the displaying means displays the individual files in user-recognizable manner, so as to allow the files to be selected by the user.

The displaying means may display, on the menu screen, a first menu for designating an arbitrary one of the stored files and a second menu for designating a file displayed immediately before the menu screen is displayed.

With this arrangement, the user can select between causing the other electronic apparatus to display information regarding arbitrary files and causing information regarding a file displayed by the displaying means immediately before the menu screen is displayed.

The storing means may store the files for respective groups, and the displaying means displays, on the menu screen, a first menu for designating an arbitrary one of the stored files and a second menu for designating, of the stored files, all files that belong to a specific one of the groups.

With this arrangement, the user can select between causing the other electronic apparatus to display information regarding an arbitrary file and causing information regarding all files that belong to a specific group. The term "group" herein refers to, for example, a folder or an event.

Preferably, when the first menu is selected on the displayed selection menu, the transmitting means transmits the attribute information by using a first protocol having a first transmission speed, and when the second menu is selected, the transmitting means transmits the attribute information by using a second protocol having a second transmission speed that is higher than the first transmission speed.

With this arrangement, when the second menu is selected, the use of the second protocol having a transmission speed that is higher than the first protocol allows a large amount of attribute information to be transmitted to the other electronic apparatus at a higher speed.

Preferably, the predetermined interface is a USB (universal serial bus), the first protocol is a PTP (picture transfer protocol) or an MTP (media transfer protocol), and the second protocol is a USB mass-storage protocol.

The PTP and the MTP are protocols that are superior in stability during communication, whereas the USB mass-storage protocol is a protocol that is superior in communication speed and accessibility. Thus, depending on a selected one of the first menu and the second menu, the electronic apparatus can transmit the attribute information by making use of different advantages of the protocols. That is, when the first menu is selected, the designated attribute information can be transmitted using the PTP, and when the second menu is selected, a large amount of attribute information can be transmitted at a high speed.

Another embodiment of the present invention, there is provided a transmission method for an electronic apparatus that is connectable to another electrical apparatus through a predetermined interface. The transmission method including the steps of: storing content files and attribute information indicating attributes of the files; inputting a user operation for designating a desired one of the stored files; and transmitting, upon connection with the other electronic apparatus, the attribute information of the designated file to the other electronic apparatus so that the other electronic apparatus displays information regarding the designated file.

In the transmission method, of the files, only attribute information of a desired file designated by the user operation is selectively transmitted to the other electronic apparatus, so that the other connection-target electronic apparatus can display information regarding the file desired by the user, on the basis of the attribute information. Thus, the user can search for only a desired file at the other electronic apparatus, and thus only the desired file can be transferred to the other electronic apparatus.

The transmission method may further include the steps of: generating pieces of identification information that identify the files, respectively; and controlling the generating step so that the identification information of an undesignated one of the files is not generated. In the transmitting step, the generated identification information may be transmitted to the other electronic apparatus before the attribute information is transmitted.

In the transmission method, of the files, the identification information of only the file designated by the user operation is generated and is transmitted to the other electronic apparatus. This allows the other electronic apparatus to selectively receive the attribute information of the file desired by the user, on the basis of the identification information.

According to still another embodiment of the present invention, there is provided a program for an electronic apparatus that is connectable to another electrical apparatus through a predetermined interface. The program causes the electronic apparatus to execute the steps of: storing content files and attribute information indicating attributes of the files; inputting a user operation for designating a desired one of the stored files; and transmitting, upon connection with the other electronic apparatus, the attribute information of the designated file to the other electronic apparatus so that the other electronic apparatus displays information regarding the designated file.

In the steps executed by the program, the electronic apparatus selectively transmits only attribute information of a desired file designated by the user operation, of the stored files, to the other electronic apparatus. Thus, the user can search for only a desired file at the other electronic apparatus, and thus only the desired file can be transferred to the other electronic apparatus. Thus, the user can search for only a desired file at the other electronic apparatus, and thus only the desired file can be transferred to the other electronic apparatus.

The transmission method may further include the steps of: generating pieces of identification information that identify the files, respectively; and controlling the generating step so that the identification information of an undesignated one of the files is not generated. In the transmitting step, the generated identification information is transmitted to the other electronic apparatus before the attribute information is transmitted.

In the steps executed by the program, the electronic apparatus generates identification information of only the file designated by the user, of the files, and transmits the identification information to the other electronic apparatus. This allows the other electronic apparatus to selectively receive the attribute information of the file desired by the user, on the basis of the identification information.

As described above, according to the present invention, it is possible to selectively transmit attribute information of a file desired by a user without need for a special configuration.

### BRIEF DESCRIPTION OF THE DRAWINGS

FIG. 1 is a perspective view showing an external appearance of a DSC according to one embodiment of the present invention;
FIG. 2 is a rear view showing an external appearance of a back side of the DSC shown in FIG. 1;
FIG. 3 is a block diagram showing the configuration of the DSC according to the embodiment of the present invention and its connection with a PC;
FIG. 4 is a flowchart showing a general flow of attribute-information transmission processing in the embodiment of the present invention;
FIG. 5 is a flowchart showing a flow of processing for image-file designation processing in the embodiment of the present invention;
FIG. 6 is a schematic view showing an example of an image-designation menu screen displayed on an LCD in the embodiment of the present invention;
FIG. 7 is a schematic view showing a display example of a screen that prompts a user to connect the DSC to the PC, the screen being displayed on the LCD, in the embodiment of the present invention;
FIGS. 8A and 8B are schematic diagrams showing issuance of ObjectHandle in the embodiment of the present invention; and
FIG. 9 is a sequence diagram showing an example of PTP-command exchanging performed between the PC and the DSC in the embodiment of the present invention.

### DESCRIPTION OF THE PREFERRED EMBODIMENT

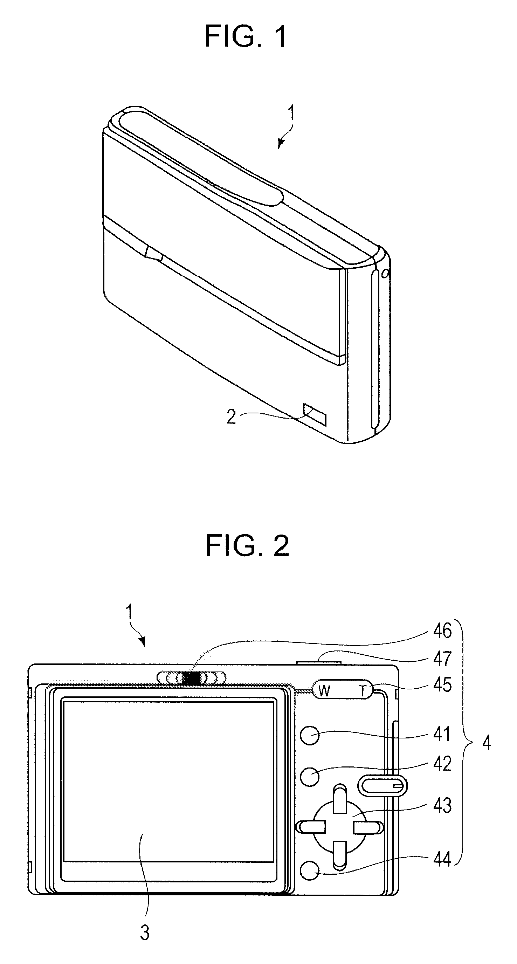

One embodiment of the present invention will be described below with reference to the accompanying drawings. In the present invention, the present invention is applied to a DSC (digital still camera) that serves as an electronic apparatus. The present invention, however, may be applied to other electrical apparatuses. FIG. 1 is a perspective view showing an external appearance of a front side of the DSC according to an embodiment of the present invention, and FIG. 2 is a rear view showing an external appearance of a back side (an operation face side) of the DSC.

As shown in FIG. 1, a DSC 1 has a USB (universal serial bus) connector 2, for example, at a front bottom portion thereof. The USB connector 2 serves as an interface for external connection. As shown in FIG. 2, the DSC 1 has an LCD (liquid crystal display) 3 on its back surface and has an operation input section 4. The operation input section 4 includes a setting button 41, an image-designation menu launch button 42, a cross key 43, an execution button 44, a zoom button 45, an image-capture/playback mode changing switch 46, a shutter button 47, and so on. The image-designation menu launch button 42 is used to display an image-designation menu screen, described below, on the LCD 3.

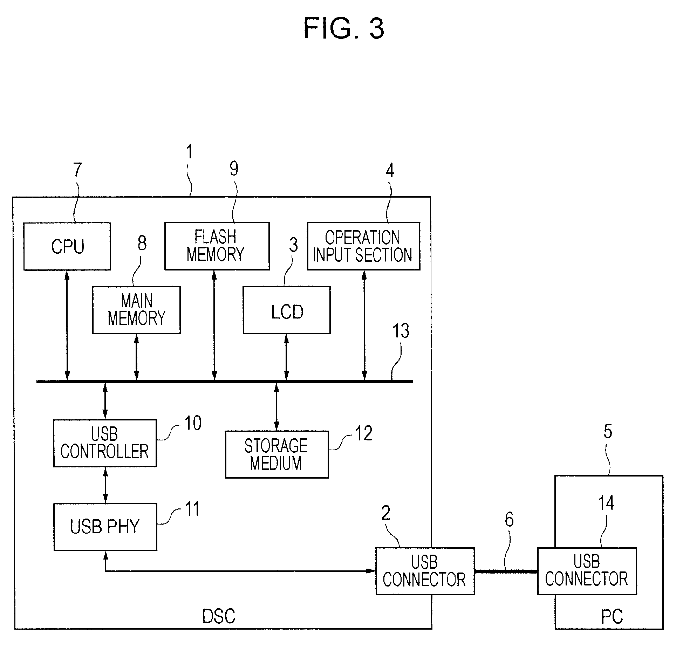

FIG. 3 is a block diagram showing the configuration of the electronic apparatus (i.e., the DSC 1) according to the embodiment of the present invention and a connection with another electronic apparatus. As shown in FIG. 3, the DSC 1 and a PC (personal computer) 5, which is one example of the other electronic apparatus, are connected through a USB cable 6. The DSC 1 and the PC 5 can perform USB-based communication with the DSC 1 serving as a device and the PC 5 serving as a host. In addition to the USB connector 2, the LCD 3, and the operation input section 4, the DSC 1 has a CPU (central processing unit) 7, a main memory 8, a flash memory 9, a USB controller 10, a USB PHY (physical layer) 11, and a storage medium 12, which are connected to a system bus 13.

In response to a control signal from the CPU 7, the LCD 3 serves as means for displaying, for example, an image of a subject before image capturing, content such as a captured-still-image file or captured-moving-image file, menus (a GUI: graphical user interface) for operation, and an image-designation menu screen, which is described below. The DSC 1 may have another type of display section, such as an organic EL (Electro-Luminescent) display, instead of the LCD 3. The operation input section 4 serves as means for inputting a user operation and sending a signal corresponding to the input operation to the CPU 7 and so on. The operation input section 4 may be configured as a touch panel integrated into the LCD 3.

When the USB connector 2 of the DSC 1 and a USB connector 14 of the PC 5 are interconnected through the USB cable 6, the DSC 1 and the PC 5 can communicate with each other. The CPU 7 accesses individual blocks, such as the main memory 8, in the DSC 1, as appropriate, and performs various computational operations to control the blocks. When the user designates a file he or she desired to transfer, the CPU 7 serves as means for generating identification information (ObjectHandle, which is described below) or means for performing control so that identification information of files that are unspecified is not generated. Details of such processing are described below. The USB connector 14 of the PC 5 has a line for a signal called a VBUS signal for detecting USB host connection. With the VBUS signal, the CPU 7 can determine that the PC 5 is connected to the USB connector 2 through the USB cable 6.

The main memory 8 is, for example, a nonvolatile memory, such as a RAM (random access memory). During various types of processing of the CPU 7, the main memory 8 provides a work area to temporarily store data, programs, and so on. For example, data of an image captured upon pressing of the shutter button 47 is temporarily read into the memory 8 and is then written to the storage medium 12. The flash memory 9 stores an OS (operating system) that is used by the CPU 7 to control the individual blocks, content files such as image files, applications that allow for designation of an image file or image files and allows for transfer of the image file(s) to the PC 5, an application used for communication based on a PTP (picture transfer protocol) or a USB mass-storage protocol.

In cooperation with the CPU 7, the USB controller 10 controls signal transmission/reception based on the PTP or the USB mass-storage protocol, the transmission/reception being performed by the USB PHY 11. The USB PHY 11, together with the CPU 7 and the USB controller 10, serves as means for transmitting/receiving a signal. That is, the USB PHY 11 performs, for example, digital-to-analog conversion to convert a signal supplied from an individual block, such as a CPU 7, into a signal format that can be transmitted/received via the USB interface, and supplies the resulting signal to the USB connector 2. The USB PHY 11 also receives a signal from the PC 5 via the USB connector 2 and performs, for example, analog-to-digital conversion to convert the signal into a signal format that can be handled by the blocks such as the CPU 7, and supplies the resulting signal to the blocks.

The storage medium 12 is, for example, a nonvolatile memory, and serves as storing means for storing content files such as image files, attribute information and thumbnails of the image files, and so on. The image files are stored in, for example, a JPEG (joint photographic experts group) format, a TIFF (tagged image file format), or a GIF (graphics interchange format). The storage medium 12 can also store the image files, for example, for each folder or event. The storage medium 12 may take a form that is removably inserted into the DSC 1 or may take a form built into the DSC 1. The system bus 13 interconnects the blocks, such as the CPU 7, to allow signals to be sent/received between the blocks.

In addition to the USB connector 14, the PC 5 has elements (not shown) that allows information processing. Examples of the elements include a CPU, a ROM, a RAM, a HDD (hard disk drive), a display section, and an operation input section. Upon connection to the DSC 1 through the USB cable 6, the PC 5 recognizes the DSC 1 through plug-and-play. A signal received by the PC 5 through the USB cable 6 is converted by the USB connector 14 and the resulting signal is subjected to computational operation processing and so on by the CPU.

An operation of the DSC 1 according to the present embodiment will be described next. Before executing processing for transmitting attribute information of image files, the DSC 1 stores, in the storage medium 12, for example, image files generated by image capturing. Upon the storage, the DSC 1 generates information, such as file names, file sizes, and a hierarchical structure, as the attribute information, and stores the attribute information in the storage medium 12 together with the image files.

When the user transfers the image files, stored in the storage medium 12, to the PC 5, the attribute information generated for the image files is transmitted to the PC 5 before the transfer of the image files. Thereafter, for example, when a user operation is performed on the PC 5 or a request is issued from an application in the PC 5, data of the image files corresponding to the transmitted attribute information is transferred to the PC 5. Now, a description will be given of processing for transmitting the attribute information of image files, the processing being performed by the DSC 1.

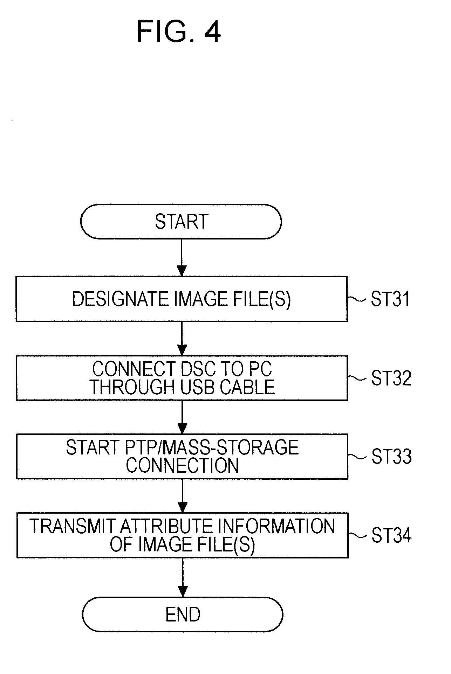

FIG. 4 is a flowchart showing a general flow of the processing for transmitting the attribute information. As shown in FIG. 4, in step ST31, on the basis of an operation input to the operation input section 4, the DSC 1 designates, of image files stored in the storage medium 12, an image file or image files desired by the user. Next, in step ST32, the DSC 1 is connected to the PC 5 through the USB cable 6. Next, in step ST33, the DSC 1 starts communication in accordance with a PTP or a USB mass-storage protocol. In step ST34, the DSC 1 transmits the attribute information of the image file(s) designated in step ST31 to the PC 5. As a result of the above-described steps, the attribute information of the image file(s) desired by user is transmitted to the PC 5, so that information of the image file(s) is displayed on the display section of the PC 5 via, for example, a GUI. Consequently, the user can handle the image file(s).

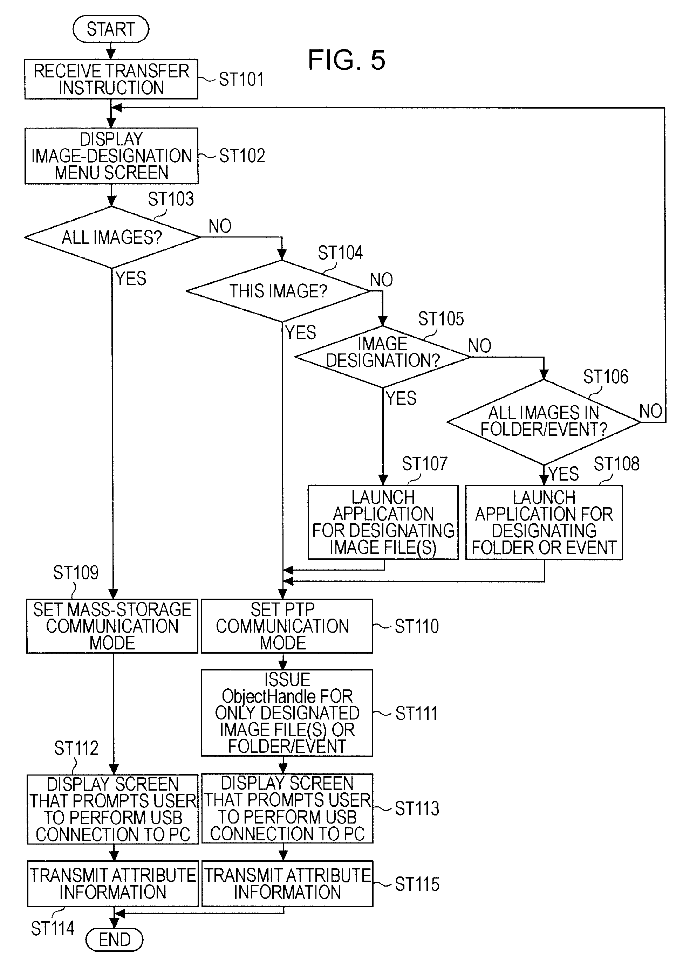

Details of the image-file designation processing performed by the DSC 1 in step ST31 will be described next. FIG. 5 is a flowchart showing a flow of the image-file designation processing performed by the DSC 1.

As shown, first, in step ST101, the CPU 7 receives a user's instruction for starting file transfer processing. The user inputs the instruction by pressing the image-designation menu launch button 42, for example, after operating the image-capture/playback mode changing switch 46 of the operation input section 4 to change the mode of the DSC 1 from an image-capture mode to a playback mode. When the operation input section 4 is implemented as a touch panel, the instruction is input when the user selects an item for launching an image-designation menu to be displayed on the LCD 3 by a touch operation.

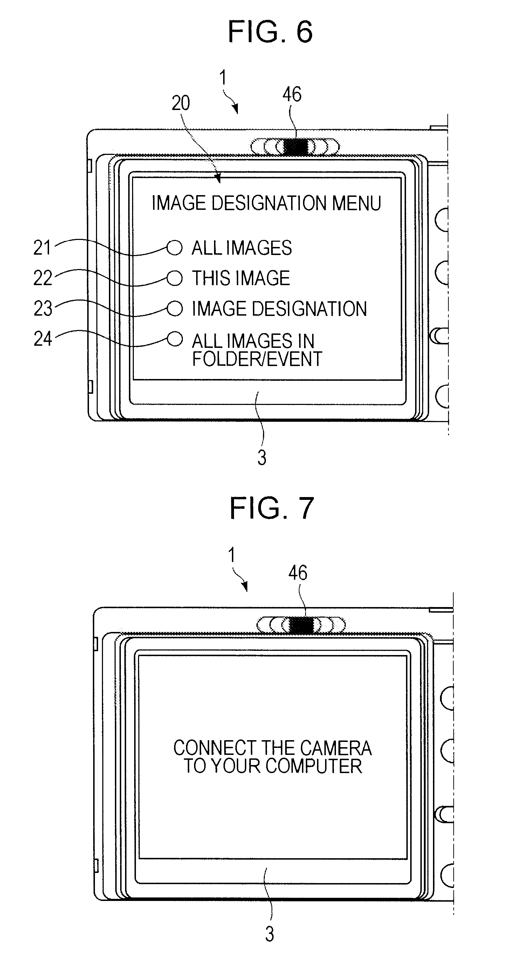

Upon receiving the instruction in step ST101, the CPU 7 displays an image-designation menu screen on the LCD 3 in step ST102. FIG. 6 shows the image-designation menu screen displayed on the LCD 3. As shown in FIG. 6, an image-designation menu screen 20 has an "all images" menu 21, a "this image" menu 22, an "image designation" menu 23, and an "all images in folder/event" menu 24. When the user presses the cross key 43 and the execution button 44 of the operation input section 4, one of the menus which is desired by the user is selected. The menus will now be described below.

The "all images" menu 21 is menu for putting all image files, stored in the storage medium 12 in the DSC 1, into a state in which they are transferable to the PC 5. When the "all images" menu 21 is selected, attribute information for all the image files is transmitted to the PC 5. The "this image" menu 22 is a menu for putting one image file, displayed immediately before the image-designation menu screen 20 is displayed, into a state in which it is transferable to the PC 5. When the "this image" menu 22 is selected, the attribute information for the corresponding image file is transmitted to the PC 5. The "image designation" menu 23 is a menu for putting an arbitrary image file or image files designated by the user into a state in which the image file(s) is transferable to the PC 5. When the "image designation" menu 23 is selected and an arbitrary image file or image files are designated, the attribute information for the designated image file(s) is transmitted to the PC 5. The "all images in folder/event" menu 24 is a menu for putting all image files in an arbitrary folder or event designated by the user into a state in which they are transferable to the PC 5. When the "all images in folder/event" menu 24 is selected and an arbitrary folder or event is designated, attribute information for all image files in the designated file or event is transmitted to the PC 5.

When an image file is created as a result of image capture or the like, a folder or event is created in order to, for example, organize the image file. The folder is created by, for example, a user operation, or is automatically created for each image-capture date or each image-capture mode of image files. The event is also extracted, for example, for each image-capture date and for each image-capture mode. The event may be automatically extracted through searching for similar images, for example, images of an event such as a sport or wedding ceremony, by using processing for clustering or extracting brightness or chromaticity differences between images. For automatic creation (extraction) of a folder or event, the DSC 1 may create (extract) the folder or event before the image-file transfer processing is started, or may temporarily extract the folder or event by using an application or the like when the "all images in folder/event" menu 24 is selected.

Referring back to FIG. 5, in step ST103, the CPU 7 determines whether or not the "all images" menu 21 is selected by a user operation on the image-designation menu screen 20 displayed in step ST102. When the "all images" menu 21 is selected (Yes), in step ST109, the CPU 7 sets a mass-storage communication mode in which a USB mass-storage protocol is used as a protocol for USB communication with the PC 5. When the "all images" menu 21 is not selected (No), in step ST104, the CPU 7 determines whether or not the "this image" menu 22 is selected by a user operation on the image-designation menu screen 20. When the "this image" menu 22 is selected (Yes), in step ST110, the CPU 7 sets a PTP communication mode in which PTP is used as a protocol for USB communication with the PC 5.

When the "this image" menu 22 is not selected in step ST104 (No), in step ST105, the CPU 7 determines whether or not the "image designation" menu 23 is selected by a user operation. When the image designation" menu 23 is selected (Yes), the CPU 7 launches an application for prompting the user to designate an arbitrary image file in step ST107. When the "this image" menu 23 is not selected in step ST105 (No), in step ST106, the CPU 7 determines whether or not the "all images in folder/event" menu 24 is selected by a user operation. When the "all images in folder/event" menu 24 is selected (Yes), the CPU 7 launches an application for prompting the user to designate a folder or event (i.e., all image files therein) in step ST108. When no menu is selected (No), the process returns to step ST102 and the CPU 7 repeats the determinations in steps ST103 to ST106.

In step ST107 described above, the CPU 7 launches, for example, an application for displaying a list of image files, recorded in the storage medium 12, on the LCD 3 and for prompting the user to designate an image file. In this case, the application may display thumbnails of the image files. The application may be adapted so as to allow the user to narrow down the image files, displayed in the list, according to the creation dates or the like of the image files. The user can designate one or more of the image files displayed in the list. When one or more image files are designated in step ST107, the CPU 7 sets the PTP communication mode in step ST110 as the mode for communication with the PC 5.

In step ST108, the CPU 7 launches an application for displaying folders or events, stored in the storage medium 12, on the LCD 3 and for prompting the user to designate a desired folder or event. By displaying a list of folders or events and prompting the user to select one or more groups, the launched application puts all images in the designated folder or event into a state in which they are transferable to the PC 5. When a folder or event is designated in step ST108, the CPU 7 sets the PTP communication mode in step ST110 as the mode for communication with the PC 5.

As described above, when the "all images" menu 21 is selected in step ST103, the CPU 7 sets a communication mode based on the USB mass-storage protocol in step ST109. In general, in the USB mass storage protocol, since a host recognizes a storage medium of a device as a removable storage, the attribute information of all image files stored in the storage medium is transmitted to the host. The USB mass-storage protocol, however, is generally superior to the PTP in terms of a communication speed and accessibility (e.g., allowing the OS of the host to copy and/or delete files in the storage medium). Thus, in the DSC 1 according to the present embodiment, for allowing all image files in the storage medium 12 to be transferred to the PC 5, the USB mass storage protocol, which has a higher communication speed than the PTP, is used as the protocol in order to more efficiently transfer a large amount of data.

In step ST109, in response to a query from the PC 5 to be connected subsequently, the CPU 7 performs processing, such as setting the value of a bInterfaceClass field in a device descriptor (described below) to 0X08, so as to make a response indicating that the USB mass storage is to be used.

In step ST112, the CPU 7 displays, on the LCD 3, a screen that prompts the user to connect the DSC 1 to the PC 5 through the USB cable 6. FIG. 7 is a display example of a screen that prompts the user to perform the connection. When the user connects the USB connector 2 and the USB connector 14 through the USB cable 6, the CPU 7 uses the USB mass-storage protocol as the protocol to transmit the attribute information of the image files to the PC 5 in step ST114. More specifically, when a USB connection is detected at a physical layer of the PC 5, the PC 5 opens a port to which the DSC 1 is connected. The PC 5 issues a standard device request to address 0. When the DSC 1 transmits a response indicating the above-mentioned device descriptor in response to the standard device request, the DSC 1 is recognized by the PC 5 as a mass-storage class device, is assigned a unique address, and loads an associated driver on the basis of information of the device descriptor. Thereafter, commands, such as a command block wrapper (CBW) and command status wrapper (CSW), are exchanged between the PC 5 and the DSC 1, so that attribute information for all image files stored in the storage medium 12 is transmitted.

When the user designates an image file or image files in step ST104, ST107, or ST108, as described above, communication based on the PTP is started. Typically, the PTP allows PTP-compliant electronic apparatuses to transfer image data therebetween without installation of device drivers and also allows files to be hidden from the destination apparatus. However, communication is typically performed with the contents of the storage medium being directly projected. Thus, when a large number of image files are stored in the storage medium 12, the use of the PTP communication procedure of the related art involves a large amount of time taken until the PC 5 recognizes the DSC 1, and thus places a large amount of processing load on the apparatuses. For example, when the user searches for or views an image file on the PC 5, he or she often has to handle unwanted image files as well.

Accordingly, the DSC 1 according to the present embodiment overcomes such problems by causing the PC 5 to recognize that only an image file or image files designated by the user are stored in the storage medium 12. In step ST110, the CPU 7 performs processing for setting so as to issue a response indicating that the PTP is to be used, in response to a query from the PC 5 to be connected subsequently.

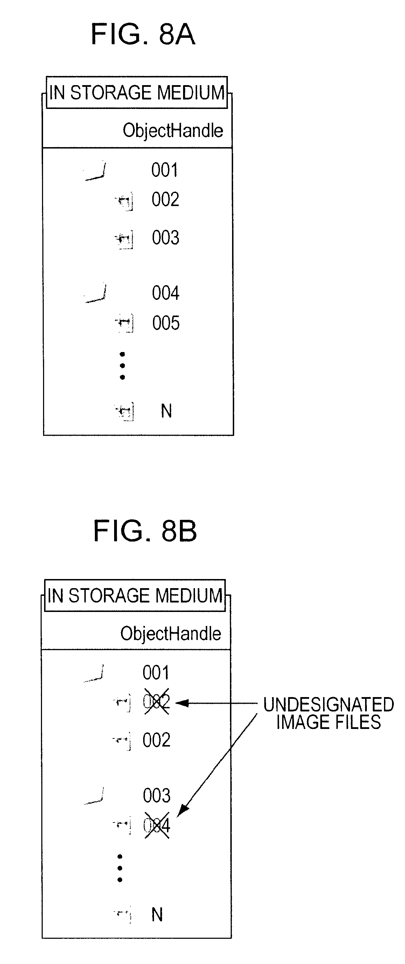

Next, in step ST111, the CPU 7 performs processing for issuing identification information for the image file(s) or file/event designated in step ST104, ST105, or ST106. In the PTP standard, each folder, file, and so on is handled as an "object". The identification information is ObjectHandle that is uniquely assigned to allow the DSC 1 and the PC 5 to identify the corresponding object. FIGS. 8A and 8B are schematic diagrams showing a state in which the DSC 1 issues ObjectHandle. In a DSC of the related art shown in FIG. 8A, ObjectHandle is issued to each of objects stored in a storage medium. In contrast, in the DSC 1 according to the present embodiment shown in FIG. 8B, ObjectHandle is not issued to objects that have not been designated by the user. Thus, by issuing ObjectHandle to only designated image files, the DSC 1 can cause the PC 5 to recognize that only the image files to which ObjectHandle has been issued (i.e., only the image files designated by the user) are stored in the storage medium 12.

Next, in step ST113, the CPU 7 displays, on the LCD 3, a screen that prompts the user to connect the DSC 1 to the PC 5 through the USB cable 6, as described in step ST112 and FIG. 7. When the user connects the USB connector 2 and the USB connector 14 through the USB cable 6, the CPU 7 uses the PTP as the protocol to transmit the attribute information of the image file(s) to the PC 5 in step ST115.

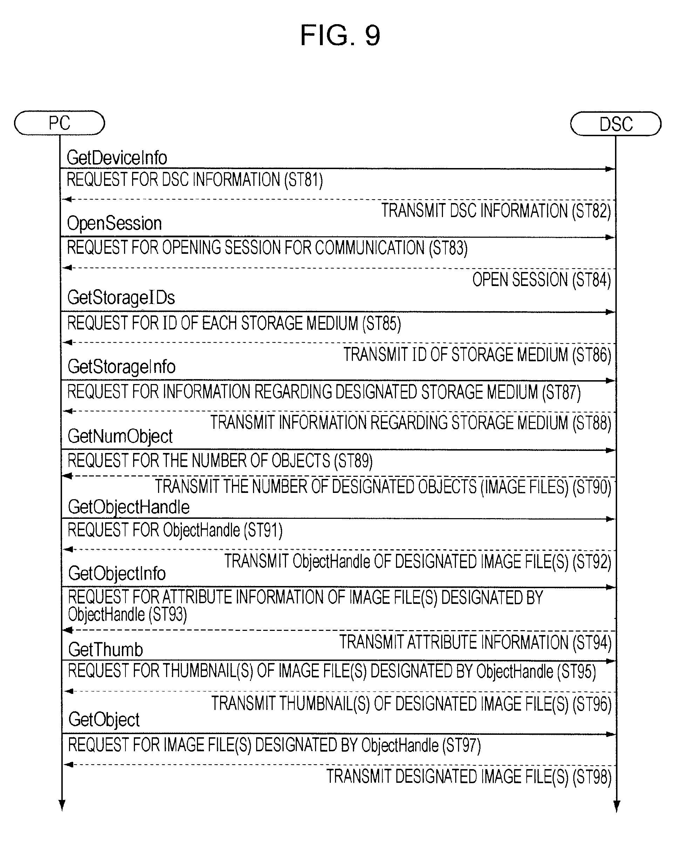

More specifically, when the physical layer of the PC 5 detects the USB connection, the PC 5 issues a PTP-compliance command. FIG. 9 shows an example of command exchanging performed between the PC 5 that serves as a host and the DSC 1 that serves as a device.

As shown in FIG. 9, first, in step ST81, the PC 5 issues a request for device information by using a GetDeviceInfo command. In response, in step ST82, the DSC 1 transmits device information, such as a manufacture name, version, and specifications. Subsequently, in step ST83, the PC 5 issues a request for opening a session for PTP communication by using an OpenSession command. In response, in step ST84, the DSC 1 opens a session to establish a connection.

Subsequently, in step ST85, the PC 5 issues a request for the ID of each effective storage medium by using a GetStorageIDs command. In response, in step ST86, the DSC 1 transmits the ID of the storage medium 12, which is an effective storage medium of the DSC 1. Subsequently, in step ST87, the PC 5 issues a request for information regarding the storage medium 12 by using a GetStorageInfo command. In step ST88, the DSC 1 transmits information regarding the storage medium 12.

Subsequently, in step ST89, the PC 5 makes a query about the number of objects stored in the storage medium 12 by using a GetNumObject command. In response, in step ST90, the DSC 1 transmits a response indicating the number of only objects to which ObjectHandle was issued in step ST111 in FIG. 5. The GetNumObject command is used, for example, to obtain information regarding an approximate storage space used for buffering ObjectHandle before PC 5 receives ObjectHandle.

Subsequently, in step ST91, the PC 5 issues a request for ObjectHandle by using a GetObjectHandle command. In step ST92, the DSC 1 transmits ObjectHandle of the designated image file(s). Subsequently, in step ST93, the PC 5 issues a request for the attribute information of the image file(s) designated by ObjectHandle, by using a GetObjectInfo command. In step ST94, the DSC 1 transmits the attribute information of the image file(s) corresponding to ObjectHandle.

Subsequently, in step ST95, the PC 5 issue a request for thumbnail(s) of the image file(s) designated by ObjectHandle, by using a GetThumb command. In step ST96, the DSC1 reads, from the storage medium 12, the thumbnail(s) of the image file(s) designated by ObjectHandle and transmits the read thumbnail file(s) to the PC 5.

As a result of the processing described above, information, such as a GUI (e.g., an icon that indicates only the specified one of the image files stored in the storage medium 12), the thumbnail (s), the file name(s), and the file size(s), is displayed on the display section of the PC 5. When a folder is selected through the "all images in folder/event" menu 24, an icon indicating the folder is also displayed on the display section of the PC 5.

Thereafter, for example, when an operation for transferring the image file(s) to the PC 5 is input by the user's drag-and-drop operation or the like on the GUI, the PC 5 issues a request for actual data of the image file(s) designated by ObjectHandle, by using a GetObject command in step ST97. In step ST98, the DSC 1 reads the image file(s) designated by ObjectHandle and transmits the read image file(s) to the PC 5. The PC 5 receives the image file(s) and stores the image file(s) in, for example, a storage location in the HDD designated by a user operation or the like.

When an image transfer application executed by the PC 5 is used to transfer the image file(s) in the storage medium 12 to the PC 5, sessions in steps ST81 to ST98 are executed as a series of processing upon a transfer instruction on the image transfer application.

As described above, according to the present embodiment, when the DSC 1 and the PC 5 are connected, the attribute information of only an image file or image files desired by the user are transmitted, so that only information regarding the image file(s) desired by the user can be displayed on the PC 5. That is, the DSC 1 can show the image files, recorded in the storage medium 12 in the DSC 1, to the PC 5 as if they were only image files designated in the above-described processing. Thus, the DSC 1 can minimize the user's waiting time taken until the PC 5 recognizes the image files, and also can reduce the user's cumbersome work for searching for a desired image file from a large number of image files. In addition, when the user of the DSC 1 shows, on the PC 5, the image files stored in the storage medium 12 to other users, the user of the DSC 1 can show them only an image file or image files that may be shown, by performing the above-described image-file designation to differentiate between image files that may be shown to them and image files that should not be shown. Also, depending on whether or not to allow all image files to be transferred to the PC 5, the communication protocol is switched between the PTP and the USB mass-storage protocol. This arrangement makes it possible to more efficiently execute the transfer processing by taking full advantage of the functions of the individual protocols. Moreover, the DSC 1 can automatically execute the protocol switching without the user recognizing it.

An embodiment of the present invention is not limited to the above-described embodiment, and various other embodiments are also possible.

Although the description in the above embodiment has been given of a case in which the electronic apparatus is a DSC, the present embodiment is also applicable to other electronic apparatuses. For example, the embodiment of the present invention may be applied to a digital video camera, a mobile phone with a camera function, and so on.

The description in the above embodiment has been give of an example in which the DSC 1 and the PC 5 are connected through the USB cable 6. However, the DSC 1 and the PC 5 may also be wirelessly connected via a WUSB (wireless USB) using a UWB (ultra wide band), PTP/IP, or the like. In such a case, the DSC 1 and the PC 5 may be provided with wireless modules that can transmit and receive carrier waves in a predetermined frequency band, instead of the USB connector 2 and the USB connector 14. When such wireless connections are used, communication may be more likely to be interrupted than a case in which a wired connection is used. Thus, for example, even when the protocol mode is set to the mass-storage communication mode in step ST109 sown in FIG. 9, the DSC 1 may switch the protocol mode to the PTP communication mode, upon recognizing in step ST112 that the connection with the PC 5 is a wireless connection. This arrangement makes it possible to prevent data loss when the communication is interrupted during image-file transfer processing using a wireless connection.

In the above-described embodiment, the PTP is used as the protocol for transferring the image file(s), designated in step ST104, ST105, or ST106, to the PC 5, but the present invention is not limited thereto. For example, the DSC 1 may use an MTP (media transfer protocol), which is an extension of the PTP. In such a case, the present invention can be applied to not only image files but also content such as music files and moving-picture files.

In the above-described embodiment, a USB is used as a communication interface for connecting the DSC 1 and the PC 5. However, for example, Ethernet®, a wireless LAN (IEEE802.11), Bluetooth, an HDMI (high-definition multimedia interface), and so on, as well as the USB can also be used as communication interfaces according to the present embodiment.

It should be understood by those skilled in the art that various modifications, combinations, sub-combinations and alterations may occur depending on design requirements and other factors insofar as they are within the scope of the appended claims or the equivalents thereof.

## Claims

1. An electronic apparatus that is connectable to another electrical apparatus through a predetermined interface, the electronic apparatus comprising:
means for storing content files and attribute information indicating attributes of the files;
means for inputting a user operation for designating a desired one of the stored files; and
means for transmitting, upon connection with the other electronic apparatus, the attribute information of the designated file to the other electronic apparatus so that the other electronic apparatus displays information regarding the designated file.

2. The electronic apparatus according to claim 1, further comprising:
means for generating pieces of identification information that identify the files, respectively; and
means for controlling the generating means so that the generating means does not generate the identification information of an undesignated one of the files;
wherein the transmitting means transmits the generated identification information to the other electronic apparatus before transmitting the attribute information.

3. The electronic apparatus according to claim 2, further comprising means for displaying a menu screen for causing the desired file to be designated.

4. The electronic apparatus according to claim 3, wherein the displaying means displays, on the menu screen, a first menu for designating an arbitrary one of the stored files and a second menu for designating all of the stored files.

5. The electronic apparatus according to claim 3, wherein the displaying means displays, on the menu screen, a first menu for designating an arbitrary one of the stored files and a second menu for designating a file displayed immediately before the menu screen is displayed.

6. The electronic apparatus according to claim 3, wherein the storing means stores the files for respective groups, and the displaying means displays, on the menu screen, a first menu for designating an arbitrary one of the stored files and a second menu for designating, of the stored files, all files that belong to a specific one of the groups.

7. The electronic apparatus according to claim 4, wherein when the first menu is selected on the displayed selection menu, the transmitting means transmits the attribute information by using a first protocol having a first transmission speed, and when the second menu is selected, the transmitting means transmits the attribute information by using a second protocol having a second transmission speed that is higher than the first transmission speed.

8. The electronic apparatus according to claim 7, wherein the predetermined interface is a universal serial bus, the first protocol is a picture transfer protocol or a media transfer protocol, and the second protocol is a universal-serial-bus mass-storage protocol.

9. A transmission method for an electronic apparatus that is connectable to another electrical apparatus through a predetermined interface, the transmission method comprising the steps of:
storing content files and attribute information indicating attributes of the files;
inputting a user operation for designating a desired one of the stored files; and
transmitting, upon connection with the other electronic apparatus, the attribute information of the designated file to the other electronic apparatus so that the other electronic apparatus displays information regarding the designated file.

10. The transmission method according to claim 9, further comprising the steps of:
generating pieces of identification information that identify the files, respectively; and
controlling the generating step so that the identification information of an undesignated one of the files is not generated;
wherein, in the transmitting step, the generated identification information is transmitted to the other electronic apparatus before the attribute information is transmitted.

11. Computer programme with programme code means in order to be able to implement all the steps according to one of the claims 9 or 10 when the programme is executed on a computer or on a digital signal processor.

12. Computer programme product with programme code means stored on a machine-readable carrier in order to be able to implement all the steps according to one of the claims 9 or 10 when the programme is executed on a computer or on a digital signal processor.
